# EUROPÄISCHE PATENTSCHRIFT

(11) **EP 1 228 116 B1**
(45) Veröffentlichungstag und Bekanntmachung des Hinweises auf die Patenterteilung: **05.11.2003**
(21) Anmeldenummer: 00956468.3
(22) Anmeldetag: 21.08.2000
(51) Int. Cl.: C08G 18/80, C08G 18/84

(54) **MALONESTER-BLOCKIERTES HDI-TRIMERISAT MIT IPDA- UND FORMALDEHYDSTABILISIERUNG**
MALONIC ESTER-BLOCKED HDI TRIMER WITH IPDA STABILIZATION AND FORMALDEHYDE STABILIZATION
TRIMERISATE DE HDI BLOQUE PAR DIESTER MALONIQUE ET STABILISATION PAR FORMALDEHYDE

(30) Priorität: 30.08.1999 DE 19941213
(43) Veröffentlichungstag der Anmeldung: 07.08.2002
(73) Patentinhaber: Bayer Aktiengesellschaft, 51368 Leverkusen (DE)
(72) Erfinder: KÖNIG, Eberhard, D-51375 Leverkusen (DE); KOBUSCH, Claus, D-40667 Meerbusch (DE); KLIPPERT, Uwe, D-51399 Burscheid (DE); KÜTTNER, Wolfram, D-51467 Bergisch Gladbach (DE)
(86) Internationale Anmeldenummer: EP0008122
(87) Internationale Veröffentlichungsnummer: WO01016202

(56) Entgegenhaltungen:
- EP-A- 0 208 867
- EP-A- 0 313 932
- EP-A- 0 319 608
- DE-A- 19 813 352

## Beschreibung

Die vorliegende Erfindung betrifft blockierte Polyisocyanat-Vemetzer und deren Verwendung in 1 K-Einbrennlacken, insbesondere in lösemittelhaltigen oder überwiegend wasserbasierenden Kunststofflacken mit Softfeel-Effekt.

Die Verwendung von CH-aciden Estern als Isocyanatblockierungsmittel gehört zum Stand der Technik; vergl. die von S. Petersen in Liebigs Ann. Chem. 562 (1949) S. 205 ff mitgeteilten Arbeiten. Vorteilhaft bei diesen Blockierungsmitteln, z.B. Malonsäurediethylester oder Acetessigsäureethylester, ist der niedrige Einbrennbereich von 80 - 120°C zur Erzeugung von Lacken. Darüber hinaus stellen sie im Gegensatz zu anderen Blockierungsmitteln keine Gefahrstoffe dar.

Nachteilig bei diesen Blockierungsmitteln ist zum einen die erhöhte Vergilbungstendenz der Lacke währen des Einbrennens und zum anderen die Kristallisationstendenz der blockierten Polyisocyanat-Vemetzer. Beispielsweise erstarrt ein mit Malonsäurediethylester blockiertes Polyisocyanat auf Basis von 1,6-Diisocyanatohexan (HDI) trotz beträchtlicher Lösemittelmenge nach einigen Tagen in einer glasartigen Masse, die allerdings wieder vorsichtig aufgeschmolzen werden kann.

Daher sind in der Patentliteratur auch Methoden zur Verhinderung dieser Nachteile bekanntgeworden. In der DE-A 19 748 587 wird vorgeschlagen, anstelle von ausschließlich Diethylmalonat ein Gemisch Diethyl/Diispropylmalonat zur Blockierung einzusetzen. Auf diese Weise wird der Kristallisationstendenz entgegengewirkt.

In der DE-A 19 813 352 wird für den gleichen Zweck der Einbau von Formaldehyd beschrieben. Außerdem verhindert der eingebaute Formaldehyd sowie der Gehalt an bestimmten Hydraziden und HALS-Aminen das Entstehen einer deutlichen Thermovergilbung des Einbrennlackes. Es hat sich allerdings gezeigt, dass bei bestimmten Polyisocyanaten die Methode der DE-A 19 813 352 nicht ausreicht, um Trübungen bzw. Ausfällungen zu verhindern (siehe Vergleichsbeispiel 2 und 3).

Die Aufgabe der Erfindung ist es, mit CH-aciden Estern blockierte Polyisocyanat-Vernetzer so herzustellen, dass eine gute Lagerstabilität der Vernetzer und eine möglichst geringe Thermovergilbung der Lacke gewährleistet ist. Diese Aufgabe konnte mit den erfindungsgemäßen blockierten Polyisocyanat-Vernetzem gelöst werden.

Gegenstand der Erfindung sind in einem Lösemittel(gemisch) gelöste blockierte Polyisocyanat-Vernetzer mit einem Gehalt an blockierten Isocyanatgruppen von 5-20, vorzugsweise 8-14 %, enthaltend

| | |
|---|---|
| 100 Äquivalent-% | NCO-Gruppen eines aliphatischen und/oder cycloaliphatischen Polyisocyanates, |
| 80-95 Äquivalent-% | eines CH-aciden Ester-Blockierungsmittels, |
| 5-20 Äquivalent-% | an NH₂-Gruppen eines aliphatischen/cycloaliphatischen Diamines und |
| 5-50 Mol-% | an Formaldehyd in eingebauter Form. |

Gegenstand der Erfindung ist schließlich auch die Verwendung der erfindungsgemäßen blockierten Polyisocyanat-Vernetzer zur Aushärtung von organischen Polyhydroxylverbindungen in Polyurethan-Einbrennlacken in lösemittelhaltiger Phase oder in wässriger Phase. Diese finden Anwendung beispielsweise für Automobil-Kunststofflacke mit Softfeel-Effekt.

Neben den oben genannten erfindungswesentlichen Komponenten können in den erfindungsgemäßen blockierten Polyisocyanat-Vernetzern noch gegen Therrnovergilbung stabilisierende Zusätze an Hydraziden und HALS-Aminen, wie in der EP-A 829 500 oder DE-A 19 856 968 beschrieben, enthalten sein.

Darüber hinaus enthalten die erfindungsgemäßen blockierten Polyisocyanat-Vernetzer noch 5-50 Gew.-%, vorzugsweise 15-30 Gew.-%, an Lösemitteln. Bevorzugt werden tendenziell wassermischbare Lösemittel, wie z.B. 1-Methoxy-2-propylacetat, Isobutanol, Butylglykol, N-Methylpyrrolidon, Butyldiglykol oder Butyldiglykolacetat eingesetzt.

Die erfindungsgemäßen blockierten Polyisocyanat-Vernetzer sind
- lagerstabile, nichtkristallisierende klare Produkte
- bei 80-120°C sowohl mit sich als auch mit OH-Komponenten reagierende Härterkomponenten
- sowohl Reaktionspartner für lösemittel- als auch für wasserbasierende OH-Komponenten

Die erfindungsgemäßen Polyisocyanatvernetzer können wie folgt hergstellt werden:

Die Polyisocyanatkomponente wird gegebenenfalls zusammen mit wenig Lösemittel, z.B. 1-Methoxy-2-propylacetat (MPA), bei ca. 50°C vorgelegt, der CH-acide Ester, z.B. Malonester, wird als Mischung mit ca. 2-3 % einer 30 %igen Na-Methylatlösung hinzudosiert und bei 60-90°C bis zum berechneten NCO-Gehalt abreagiert. Danach wird die kalkulierte Menge Diamin, z.B. 1-Amino-3, 3, 5-trimethyl-5-aminomethyl-cyclohexan (IPDA), gelöst in weiterem MPA, hinzugegeben und bei ca. 50-70°C abreagiert, so dass keine NCO-Gruppen mehr nachweisbar sind. Bei 40-50°C gibt man danach die klare Lösung aus Paraformaldehyd, etwa 10 %, bezogen auf Paraformaldehyd, an einer 30 %igen Na-Methylatlösung als Base und Isobutanol zu dem Ansatz und rührt 1-2 Stunden bei 40-50°C nach, wodurch der Formaldehyd chemisch gebunden wird (eingebaute Form). Freier Formaldehyd kann nur kleiner 0,1 % nachgewiesen werden. Für die besondere Ausführungsform der erfindungsgemäßen Vemetzer, insbesondere für Lacke mit hellen Farbtönen, können an dieser Stelle des Ansatzes die Stabilisatoren gegen Thermovergilbung, z.B. das weiter oben erwähnte Additionsprodukt aus 2 Mol Propylencarbonat und 1 Mol Hydrazin, und das HALS-Amin Tinuvin 770 DF® (Fa. Ciba Speciality) eingerührt werden. Zwecks Einstellung der gewünschten Viskosität in einem Bereich von < 10000 mPas wird mit weiterem Alkohol, z.B. Isobutanol und/oder Butylglykol, verdünnt und schließlich mit 0,5-2,5 %, bezogen auf Ansatz, an Dibutylphosphat schwach sauer gestellt (pH 5,0-6,9).

Bei den den erfindungsgemäßen blockierten Polyisocyanat-Vernetzern zugrundeliegenden Polyisocyanaten handelt es sich um bekannte Lackpolyisocyanate mit aliphatisch und/oder cycloaliphatisch gebundenen Isocyanatgruppen und einem Isocyanatgehalt von 7 bis 30, vorzugsweise 12 bis 25 Gew.-%.

Vorzugsweise eingesetzt werden an sich bekannte Biuret-, Isocyanurat-, Urethan-, Allophanat- und/oder Uretdiongruppen aufweisende Lackpolyisocyanate auf Basis von 1,6-Diisocyanatohexan (HDI), 1-Isocyanato-3,3,5-trimethyl-5-isocyanatomethylcyclohexan (IPDI) und/oder Bis-(4-isocyanatocyclohexyl)-methan (H₁₂MDI bzw. Desmodur W®/Bayer AG). Außerdem können als Polyisocyanatkomponenten die asymetrisch trimerisierten, also neben Isocyanurat auch über Iminooxadiazindiongruppen verfügende Lackpolyisocyanate auf Basis von 1,6-Diisocyanatohexan eingesetzt werden, wie sie z.B. in der EP-A 798 299 beschrieben sind.

Es können auch Polyisocyanate auf Basis anderer Isocyanate wie z.B. Diisocyanatobutan-1,4, 2,4- bzw. 2,6-Diisocyanato-1-methyl-cyclohexan, 2,5- und/oder 2,6-Bisisocyanato-norbonan, 3- und/oder 4-Isocyanatomethyl-1-methylcyclohexan, 1,4-Bis-(2-isocyanato-prop-2-yl)-benzol, 1,3-Diisocyanatomethylbenzol, 1,3- oder 1,4-Bisisocyanatomethylcyclohexan eingesetzt werden.

Ganz besonders bevorzugt als Polyisocyanatkomponente sind Isocyanuratgruppen aufweisende Polyisocyanate auf Basis von 1,6-Diisocyanatohexan.

Als Blockierungskomponente kommen CH-acide Ester, beispielsweise Malonsäurediethylester oder Acetessigsäureethylester und/oder deren Methyl-, Isopropyl-, Isobutyl- oder tert.-Butyl-Derivate in Betracht. Bevorzugt ist Malonsäurediethylester.

Die in den erfindungsgemäßen Vernetzern eingebaute Diaminkomponente hat die Aufgabe, auf schonende Weise mit den nach der NCO-Blockierungsreaktion noch verbleibenden NCO-Gruppen abzureagieren und damit zur Molekülvergrößerung beizutragen. Auf diese Weise werden 5-20 Äquivalent-%, bevorzugt 7-10 Äquivalent-%, an NCO-Gruppen durch Diaminverlängerung abreagiert und eine mögliche Kristallisationstendenz verhindert. An Diaminen kommen aliphatische und cycloaliphatische in Betracht. Beispielhaft genannt seien Ethylen- und Propylendiamin, 4,4'-Diaminodicyclohexylmethan und 1,4-Diaminocyclohexan. Bevorzugt ist 3,3,5-Trimethyl-5-aminomethylcyclohexylamin (IPDA).

Durch den Einbau von Formaldehyd in die erfindungsgemäßen Vernetzer wird zum einen die Kristallisationsneigung insbesondere von blockierten Polyisocyanaten auf HDI-Basis aber auch die Thermovergilbung der Einbrennlacke deutlich vermindert.

Auf 100 Äquivalent-% blockiertes und diaminverlängertes Polyisocyanat werden vorzugsweise 0,1 bis 0,4 Mol, d. h. 10-40 Äquivalent-% an Paraformaldehyd eingesetzt und mit einer Base, z.B. Na-Methylat, einreagiert. Dies sind 0,5 bis 5,0 Gew.-% Formaldehyd, bezogen auf den erfindungsgemäßen Vemetzer ohne Lösemittelanteil.

Als zusätzliche Stabilisierungskomponenten können die aus der EP-A 0 829 500 bekannten Stabilisatoren eingesetzt werden. Bevorzugt ist erfindungsgemäß das durch Addition von Hydrazinhydrat an 2 Mol Propylencarbonat gut zugängliche einbaubare Hydrazid der Formel (Ia) 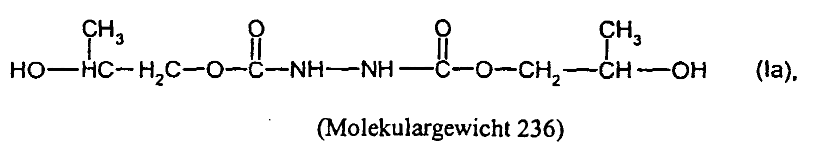 und das am N-Atom unsubstituierte HALS-Amin Tinuvin 770 DF® (Fa. Ciba Speciality).

Vom erstgenannten Stabilisator werden hierbei vorzugsweise 3 bis 6 Gew.-%, vom letztgenannten vorzugsweise 0,5 bis 1,5 Gew.-%, jeweils bezogen auf erfindungsgemäße Vernetzer ohne Lösemittelanteil, eingesetzt.

An Lösemitteln, bzw. deren Gemische können die an sich aus der Polyurethanchemie bekannten, gegen NCO-Gruppen inerten Lösemittel, beispielsweise 1-Methoxy-2-propylacetat, Solventnaphta 100 oder Butylacetat sowie N-Methylpyrrolidon und Butyldiglykolacetat, verwendet werden. Sind die NCO-Gruppen blockiert, so verwendet man auch bevorzugt Alkohole, z.B. Butanole wie Isobutanol oder Butylglykol, um eine Umesterung mit den Alkoholresten des Blockierungsmittels zu ermöglichen. Wird der erfindungsgemäße Polyisocyanat-Vernetzer in Verbindung mit wässrigen OH-Komponenten zur Herstellung wasser-basierender Bindemittel verwendet, dann enthält er, bezogen auf die Polyisocyanatvernetzer-Lösung zusätzlich 5 bis 20 Gew.-% an N-Methylpyrrolydon.

Die erfindungsgemäßen Polyisocyanatvernetzer besitzen gute Lagerstabilität, d.h. keine Kristallisation, geringe Thermovergilbung und gute lacktechnische Eigenschaften.

Die mit den erfindungsgemäßen Vernetzern herstellbaren Lackfilme zeigen dauerhaft beständige Softfeel-Oberflächen mit guter Substrathaftung (Haptik). Sie eignen sich daher vorzugsweise zur Beschichtung und Lackierung von Kunststoffoberflächen.

### Beispiele

### Beispiel 1 (erfindungsgemäß)

Der hier beschriebene blockierte Polyisocyanat-Vernetzer hat einen IPDA-Gehalt von 2,32 Gew.-% und einen Formaldehydgehalt von 2,46 Gew.-%, bezogen auf den Festkörper.

### Ansatz

| | | |
|---|---|---|
| 196,0 g | (1,0 Val) | eines isocyanurathaltigen Lackpolyisocyanates auf Basis von 1,6-Diisocyanatohexan (HDI) mit einem NCO-Gehalt von 21,4 Gew.-%, Visk. bei 23°C ca. 3000 mPas |
| 152,0 g | (0,95 Mol) | Malonsäurediethylester |
| 3,0 g | | Na-Methylatlösung, 30 %ig in Methanol |
| 8,5 g | (0,10 Val) | 3, 3, 5-Trimethyl-5-aminomethylcyclohexylamin (IPDA) |
| 9,0 g | (0,30 Mol) | Paraformaldehyd |
| 0,9 g | | Na-Methylatlösung, 30 %ig in Methanol |
| 40,6 g | | N-Methylpyrrolidon (NMP) |
| 40,6 g | | Isobutanol (IB) |
| 40,6 g | | Butylglykol (BG) |
| 4,8 g | | Dibutylphosphat |
| 496,0 g | (0,95 Val) | blockierte NCO-Gruppen |

| | |
|---|---|
| Festkörpergehalt | 75 Gew.-% |
| blockierter NCO-Gehalt | 8,0 Gew.-% |
| Viskosität bei 23°C | ca. 7200 mPas |
| Hazenfarbzahl | < 100 |
| NCO-Äquivalent | 525 g |

### Durchführung

Das Polyisocyanat wird bei ca. 50°C vorgelegt. Unter Rühren wird hierzu in größeren Portionen die Mischung aus Malonester und Na-Methylatlösung gegeben. Nach beendeter Zugabe rührt man 2-3 Stunden nach, bis ein NCO-Gehalt von 0,6-0,8 % gefunden wird, berechnet ist ein NCO-Gehalt von 0,6 %. Man gibt die Lösung aus IPDA und NMP hinzu und rührt 30 min. bei 60°C nach, bis kein NCO-Gehalt mehr nachweisbar ist. Man verdünnt mit BG und gibt die klare Lösung aus Paraformaldehyd, Na-Methylatlösung und IB hinzu und rührt ca. 3 Stunden bei 50°C nach. Danach lässt man abkühlen, säuert mit Dibutylphosphat an und füllt ab. Man erhält eine klare, über Monate lagerstabile Lösung eines blockierten Polyisocyanat-Vernetzers mit den im Ansatz mitgeteilten Merkmalen.

### Beispiel 2 (Vergleichsbeispiel)

Es wird der Vemetzer gemäß Beispiel 1 mit folgender Änderung nachgearbeitet: 0,1 Val IPDA werden weggelassen und durch Malonester ergänzt. Dieser Vernetzer trübt nach 7 Tagen Lagerung bei Raumtemperatur ein, bleibt aber flüssig.

### Beispiel 3 (Vergleichsbeispiel)

Es wird der Vernetzer gemäß Beispiel 2 mit folgender Änderung nachgearbeitet: Es unterbleibt der Einbau von Formaldehyd. Gegenüber dem Vernetzer aus Beispiel 1 fehlen also IPDA und Formaldehyd.

Dieser Vernetzer erstarrt nach 3 Tagen Lagerung bei Raumtemperatur zu einer glasartigen, durchsichtigen Masse.

### Beispiel 4 (erfindungsgemäß)

Es wird die Verwendung des Vemetzers gemäß Beispiel 1 in einem wässrigen Softfeel-Lack, der einkomponentig verarbeitet wird, beschrieben. Überraschend war dabei, dass der sehr reaktive und lösemittelhaltige Vemetzer-Typ gemäß Beispiel 1 mit den überwiegend in Wasser dispergierten Harzkomponenten homogen verrührt werden konnte. Weiterhin war überraschend, dass diese Lackansätze mindestens 2 Wochen stabil und verarbeitbar sind, was für wässrige Malonester-blockierte Isocyanate höchst ungewöhnlich ist.

### Lackansatz

| | Gew.-Teile |
|---|---|
| Bayhydrol® VP LS 2244/1 (Bayer AG, OH-Polyesterharz 80 %ig in NMP, OH-Gehalt der Lieferform 1,44 %, 1 OH-Äquivalent = 1180 g) | 50,0 |
| Bayhydrol® PR 240 (Bayer AG, nichtfunktionelle PUR-Dispersion, 40 %ig in Wasser) | 100,0 |
| Entschäumer DNE, Lff. (K. Obermayer, Bad Berleburg) | 0,6 |
| Tego Wet® KL 245, 50 %ig in Wasser (Tegochemie, Essen) | 1,1 |
| Aquacer® 535, Lff. (Byk Chemie, Wesel) | 4,5 |
| Byk 348, Lff. (Byk Chemie, Wesel) | 1,5 |
| Sillitin® Z 86 (Hoffmann & Söhne, Neuburg) | 10,6 |
| Pergopak® M3 (Martinswerk, Bergheim) | 15,8 |
| Talkum IT Extra (Norwegian Talc, Frankfurt) | 5,3 |
| Bayferrox® 318 M | 42,3 |
| Mattierungsmittel OK 412 (Degussa, Frankfurt) | 5,3 |
| Destilliertes Wasser | 71,5 |
| **Summe** | **308,5** |
| Vernetzer gemäß Beispiel 1 (NCO/OH-Verhältnis 1,5) | 34,3 |
| **Wässriger Effektlack** | **342,8** |

Dieser Lack wird mit einem Luftdruck von 3 bar über eine 1,4 mm-Düse auf Kunststoffplatten (Bayblend T 65 MN) gespritzt und 45 min. bei 80°C und 45 min. bei 100°C getrocknet.

### Lackbeurteilung

Der eingebrannte (80-100°C) schwarze Mattlack erzeugt ein angenehmes Griffempfinden (spezielle Haptik), eine Art Gummieffekt, wenn man darauf reibt.

Die Pendelhärte, Lösemittelbeständigkeiten und der Crockmetertest ergeben gute Werte, vergleichbar denen eines 2K-Systems mit einem nichtblockierten, wasserdispergierten Polyisocyanat.

### Beispiel 5 (erfindungsgemäß)

Dieser Vernetzer entspricht in der Zusammensetzung demjenigen gemäß Beispiel 1. Zusätzlich werden aber noch die Stabilisatoren, und zwar 11,8 g (0,05 Mol) des im Text genannten Adduktes aus 2 Mol Propylencarbonat und 1 Mol Hydrazin mit M = 236 sowie 3,7 g Tinuvin® 770 DF von Ciba Speciality und 5,2 g Isobutanol hinzugefügt.

Dieser Vernetzer hat folgende Kenndaten:
516,7 g (0,95 Val) blockierte NCO-Gmppen

| | |
|---|---|
| Festkörpergehalt | 75 Gew.-% |
| blockierter NCO-Gehalt | 7,7 Gew.-% |
| (blockiertes) NCO-Äquivalent | 545 g |

### Beispiel 6 (erfindungsgemäß)

Es wird die Herstellung von wässrigen Klarlacken mit den Vernetzern gemäß der Beispiele 1 und 5 beschrieben. Anhand dieser Klarlacke wird die Überbrennvergilbung verglichen.

| | | |
|---|---|---|
| **Lack 1:** | Vernetzer gemäß Beispiel 1 525 g | Bayhydrol® VP LS 2058^{*)} 850 g |
| **Lack 2:** | Vernetzer gemäß Beispiel 5 545 g | Bayhydrol® VP LS 2058^{*)} 850 g |

| | | |
|---|---|---|
| *) Bayhydrol® VP LS 2058 von der Bayer AG ist eine OH-Gruppen enthaltende PES-PAC-Dispersion, die überwiegend in Wasser neben wenig Butylglykol dispergiert ist. Der OH-Gehalt der Lieferform beträgt 2 %, das OH-Äquivalent 850 g. | | |

Die Klarlacke werden durch Vermischen mittels eines Glasstabes von Vernetzer und OH-Harz im Verhältnis der Äquivalengewichte (NCO : OH = 1 : 1), wie oben angegeben, hergestellt. Nach ca. 15 min. Entlüftungszeit sind die Lacke verarbeitbar.

Mittels einer Luftdrucksprühpistole (Düse 1,4 mm, Anspritzdruck 2,5 bar) werden Klarlackfilme (Trockenfilmstärke 40-50 µm) auf Glasplatten erzeugt, 3 min. bei Raumtemperatur abgelüftet und 30 min. bei 100°C eingebrannt. Mittels der CieLab-Methode werden die b-Werte (Gelbwerte) ermittelt. Danach werden die Klarlackfilme 30 min. bei 160°C überbrannt und abermals die b-Werte ermittelt. Die Differenz dieser b-Werte, also die Δb-Werte, sind ein Maß für die Überbrennfestigkeit der Lacke.

| | **Lack 1** | **Lack 2** |
|---|---|---|
| Δb-Werte ermittelt nach CieLab-Methode zwischen 30' 100°C und 30' 160°C | 2,1 | 0,7 |

Wie man sieht, hat der Lack 2 mit dem zusätzlich stabilisierten Vernetzer einen geringeren Δb-Wert von 0,7 als Lack 1; dieser Lack vergilbt unter Überbrennbedingungen deutlich geringer als Lack 1.

### Beispiel 7 (erfindungsgemäß)

Es wird die Herstellung eines erfindungsgemäßen Vernetzers auf Basis von Desmodur®W und die Formulierung eines wässrigen Klarlackes nebst Lackeigenschaften beschrieben.

### a) Vernetzer

| Ansatz | | |
|---|---|---|
| 246,0 g | (1,0 Val) | eines antrimerisierten Polyisocyanates auf Basis von Desmodur®W, 80 %ig gelöst in Butyldiglykolacetat mit einem NCO-Gehalt von 17,1 Gew.-% ¹⁾ |
| 160,0 g | (1,0 Val) | Malonsäurediethylester (MDE) |
| 3,5 g | - | Na-Methylatlösung, 30 %ig in Methanol |
| 8,5 g | (0,1 Val) | 3,3,5-Trimethyl-5-aminomethylcyclohexylamin (IPDA) |
| 3,0 g | (0,1 Val) | Paraformaldehyd (Pafo) |
| 3,7 g | - | Tinuvin® 770 DF ²⁾ |
| 7,5 g | - | Hydrazinaddukt ³⁾ |

| Ansatz: | | |
|---|---|---|
| 78,5 g | - | Butylglykolacetat (BDGA) |
| 39,3 g | - | Isobutanol (IB) |
| 39,3 g | - | N-Methylpyrrolidon (NMP) |
| 11,7 g | - | Dibutylphosphat (DPP) |
| **601,0 g** | **(1,0 Val)** | **Blockierte NCO-Gruppen** |

| | |
|---|---|
| Feststoff, Ber. | ca. 65 % |
| Viskosität bei 23°C | ca. 9800 mPas |
| pH-Wert | ca. 5,3 |
| klare, fast farblose Lösung | Hazen 60-80 |
| blockierter NCO-Gehalt, Ber. | 7,0 Gew.-% |

**1)**

| | | | | |
|---|---|---|---|---|
| 15,0 Val | Desmodur®W | = | 1965,0 g | NCO-Gehalt: 32,06 % |
| 5,25 Val | Trimerisierung mit 10 %iger Triton-B-Lösung in n-Butanol bei 85-95 °C | | | |
| 9,75 Val | NCO-Gruppen | = | 1965,0 g | NCO-Gehalt: Gef. 20,8 % |
| | BDGA (80 %ig) | = | 491,3 g | |
| 9,75 Val | NCO-Gruppen | = | 2456,3 g | NCO Gef.: 17,1 % |
| 1,0 Val | Desmodur®W antrimerisiert | = | 246,0 g | |

Die Trimerisierung (Isocyanurat-Bildung) von Desmodur®W erfolgt nach den üblichen Schritten: Anlegen von Vakuum und Entfernen von gelöstem CO₂, Erwärmen unter Rühren auf ca. 80°C und tropfenweise Zugabe der Katalysatorlösung bis zum exothermen Anspringen der Trimerisierungsreaktion, danach wird durch regelmäßige Zugabe von Katalysatorlösung die Reaktion bei 85-95°C gehalten, für obigen Ansatz werden in ca. 5 Stunden 8-12 ml an Katalysatorlösung verbraucht, bei dem gewünschten NCO-Gehalt wird mit BDGA verdünnt und damit die Umsetzung abgebrochen.
**2)** Zu beziehen bei Ciba Specialty
**3)** Es handelt sich um das Umsetzungsprodukt von 2 Mol Propylencarbonat (102) mit 1 Mol Hydrazinhydrat (50), z. B. durch Kochen dieser Edukte am Rückfluss in Toluol und Abdestillieren von Toluol und Hydratwasser verbleibt ein farbloses Öl mit MW 236.

### Darstellung: (Herstellung eines blockierten Isocyanates)

Für die Blockierung wird das antrimerisierte Desmodur®W mit 2/3 der MDE-Menge verrührt und auf ca. 50°C vorgewärmt. Das restliche Drittel an MDE wird mit 3,2 g an Na-Methylatlösung zu einem Katalysatoransatz vermischt. Dieser Katalysatoransatz wird portionsweise hinzudosiert, wobei die Temperatur bis auf 70-75°C ansteigen darf. Nach beendeter Katalysatorzugabe wird noch 5 Stunden bei 70°C nachgerührt. Der Ansatz weist dann noch einen NCO-Gehalt von 0,3-0,8 % auf. Es wird mit BDGA verdünnt und mit IPDA werden die restlichen NCO-Gruppen gebunden. Ein NCO-Gehalt ist nicht mehr nachweisbar. Bei 50 °C wird die klare Lösung aus Pafo, 0,3 g-Na-Methylatlösung und IB hinzugegeben und 2 Stunden bei 50°C nachgerührt.

Danach wird die Lösung aus Tinuvin® 770 DF, Hydrazinaddukt und NMP hinzugegeben und 1 Stunde bei 50°C nachgerührt. Zum Schluss wird DBP hinzugefügt und 5 Stunden bei 50°C gerührt. Man erhält eine lagerstabile, nicht gasende (CO₂) Lösung eines malonesterblockierten Polyisocyanats mit den eingangs genannten Kennzeichen.

### b) Klarlackformulierung

| Gew.-Teile | | |
|---|---|---|
| 46,00 | (0,054 Val) | Bayhydrol®VP LS 2058, 42 %ig in Wasser, OH-Äquivalent 850 g, vergl. Beispiel 6 |
| 0,27 | | Byk 346 |
| 0,49 | | Byk 380 |
| 0,17 | | Syrfinol® SE/F |
| 31,90 | (0,053 Val) | Vernetzer gemäß Beispiel 7a |
| 21,17 | | Wasser |
| **100,00** | | **Summe, Lackansatz** |

### Lackzusammensetzung in %:

| | |
|---|---|
| Bindemittel | ca. 40,0 |
| Wasser | ca. 49,0 |
| organische Lösemittel | ca. 10,0 |
| Additive | ca. 1,0 |
| | **100,0** |

Dieser Lackansatz ist 5 Tage bei 40°C lagerstabil.

### Lacktechnische Daten:

| | |
|---|---|
| NCO/OH-Verhältnis | 1,0 |
| Auslaufzeit (DIN-4-Becher) | ca. 30 sec. |
| pH-Wert | ca. 7,5 |

### Herstellung und Verarbeitungshinweise:

Die Komponenten werden in der oben genannten Reihenfolge in einem Dissolver dispergiert und, wie in Beispiel 4 angegeben, auf Kunststoffplatten gespritzt und bei 90 bzw. 100°C während 30 min. getrocknet.

### c) Lackeigenschaften

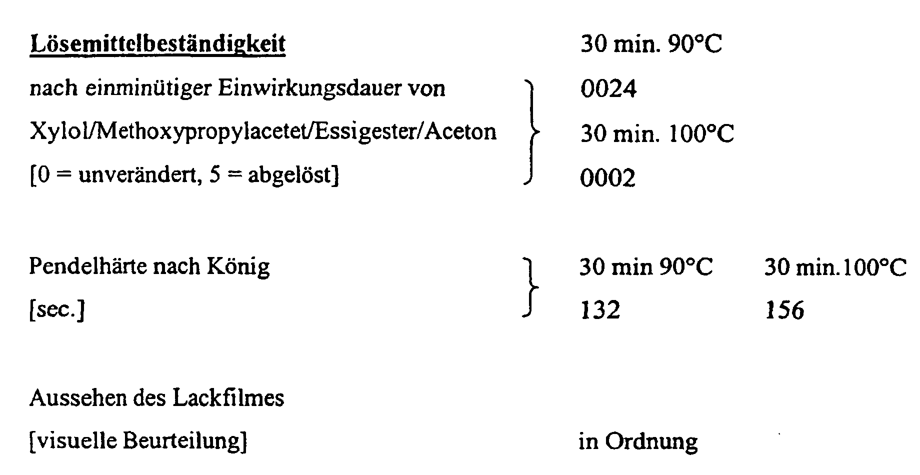

### Beispiel 8 (Vergleich)

Bei Duranate® MF-K (Fa. Asahi/J) handelt es sich um ein mit Malonsäurediethylester blockiertes HDJ-Trimerisat. Dieses enthält als Lösemittel Toluol, Ethylacetat und n-Butanol.

Im Vergleich zu den erfindungsgemäßen Vernetzern gemäß der Beispiele 1 und 7 lässt sich Duranate® MF-K nicht in analoger Weise zu Wasserlacken formulieren. Außerdem ist dieser Vernetzer nicht lagerstabil, was an der sehr starken Gasentwicklung (CO₂) bei 40°C festgestellt wurde.

## Patentansprüche

1. In einem Lösemittel(gemisch) gelöste blockierte Polyisocyanat-Vernetzer enthaltend
| | |
|---|---|
| 100 Äquivalent-% | NCO-Gruppen eines aliphatischen und/oder cycloaliphatischen Polyisocyanates, |
| 80-95 Äquivalent-% | eines CH-aciden Ester-Blockierungsmittels, |
| 5-20 Äquivalent-% | an NH₂-Gruppen eines aliphatischen/cycloaliphatischen Diamines |
| | und |
| 5-40 Mol-% | an Formaldehyd in eingebauter Form. |

2. Verwendung der blockierten Polyisocyanat-Vernetzer gemäß Anspruch 1 bei der Herstellung von Überzügen sowohl aus lösemittelhaltiger als auch aus wässriger Phase.

## Claims

1. Blocked polyisocyanate crosslinking agents dissolved in a solvent (mixture) and containing
| | |
|---|---|
| 100 eq.% | of NCO groups of an aliphatic and/or cycloaliphatic polyisocyanate, |
| 80-95 eq.% | of a CH-acidic ester blocking agent, |
| 5-20 eq.% | of NH₂ groups of an aliphatic/ cycloaliphatic diamine |
| | and |
| 5-40 mol% | of formaldehyde in incorporated form. |

2. Use of the blocked polyisocyanate crosslinking agents according to claim 1 in the production of coatings from both the solvent-containing and the aqueous phase.

## Revendications

1. Polyisocyanate réticulant bloqué en solution dans un solvant ou mélange solvant, qui contient
| | |
|---|---|
| 100 équivalents % | de groupes NCO d'un polyisocyanate aliphatique et/ou cycloaliphatique, |
| 80 à 95 équivalents % | d'un agent bloquant consistant en un ester à CH acide, |
| 5 à 20 équivalents % | de groupes NH₂ d'une diamine aliphatique/cycloaliphatique |
| et | |
| 5 à 40 mol % | de formaldéhyde à l'état chimiquement combiné. |

2. Utilisation du polyisocyanate réticulant bloqué selon la revendication 1 pour l'application de revêtements, aussi bien en phase contenant des solvants qu'en phase aqueuse.
